# FASCICULE DE BREVET EUROPEEN

(11) **EP 4 437 175 B1**
(45) Date de publication et mention de la délivrance du brevet: **18.11.2026**
(21) Numéro de dépôt: 22829783.4
(22) Date de dépôt: 21.11.2022
(51) Int. Cl.: D07B 1/06

(54) **PRODUIT RENFORCE A GEOMETRIE DE CABLE FIXE PRESENTANT UN COMPORTEMENT BIMODULE A RIGIDITE ADAPTEE**
VERSTÄRKTES PRODUKT MIT FESTER KABELGEOMETRIE MIT BI-MODULUS-VERHALTEN MIT ANGEPASSTER STEIFIGKEIT
REINFORCED PRODUCT WITH FIXED CABLE GEOMETRY, HAVING BI-MODULUS BEHAVIOUR WITH ADAPTED STIFFNESS

(30) Priorité: 25.11.2021 FR 2112512
(43) Date de publication de la demande: 02.10.2024
(73) Titulaire: COMPAGNIE GENERALE DES ETABLISSEMENTS MICHELIN, 63000 Clermont-Ferrand (FR)
(72) Inventeur: PATAUT, Gaël, 63040 CLERMONT-FERRAND CEDEX 9 (FR); LAUBY, Lucas, 63040 CLERMONT-FERRAND CEDEX 9 (FR); REIX, Olivier, 63040 CLERMONT-FERRAND CEDEX 9 (FR); NOEL, Sébastien, 63040 CLERMONT-FERRAND CEDEX 9 (FR)
(74) Mandataire: M.F.P. Michelin
(86) Numéro de dépôt international: PCT/FR2022/052136
(87) Numéro de publication internationale: WO 2023/094755

(56) Documents cités:
- WO-A1-2020/021006
- WO-A1-2020/021007
- WO-A1-2021/124138
- WO-A2-2015/014639
- US-A1- 2004 250 936

## Description

La présente invention est relative à un produit renforcé et un pneumatique comprenant un tel produit.

Bien que non limitée à ce type d'application, l'invention sera plus particulièrement décrite en référence à un pneumatique destiné à équiper des véhicules portant de lourdes charges, tels que, par exemple les camions, tracteurs, remorques ou bus routiers.

Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

On connait de l'état de la technique, un pneumatique comprenant une armature de sommet comprenant des câbles bi-modules comme décrits dans la demande WO 2020021006. Afin d'obtenir un produit renforcé ayant une rigidité suffisante, il est cependant nécessaire de sélectionner le câble qui possède la rigidité attendue une fois noyé dans la matrice polymérique.

On connait également de l'état de la technique le document WO2021124138.

Ainsi, il est nécessaire de procéder à des sélections de câbles selon le poste auquel il est destiné dans le pneumatique et notamment en nappe sommet qui requiert une rigidité élevée pour la tenue du pneumatique et un allongement suffisant pour l'étape de confection/cuisson du pneumatique et donc un comportement bi-module plus ou moins marqué. Cette étape peut s'avérer longue et fastidieuse pour sélectionner le câble du produit renforcé répondant au cahier des charges.

Usuellement, pour faire varier la rigidité d'un produit renforcé, l'homme de l'art joue principalement sur l'architecture du câble, par exemple en modifiant l'angle d'hélice. L'évaluation de plusieurs géométries de câbles est donc nécessaire pour faire varier la rigidité du produit renforcé afin d'adapter le produit renforcé à l'usage visé.

L'invention a pour but un produit renforcé dont le pilotage de la rigidité et du comportement bi-module est simplifié en modifiant la matrice polymérique sans opérer de modification du câble.

A cet effet l'invention a pour objet un produit renforcé comprenant une matrice polymérique et au moins un câble comprenant une unique couche constituée de N éléments de renforcements métalliques enroulés en hélice, chaque élément de renforcement métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément de renforcement métallique de la couche et l'axe principal est sensiblement constante et égale pour tous les éléments de renforcements métalliques de la couche, les éléments de renforcement métallique étant :
- ou bien des fils métalliques présentant un diamètre Df, avec les éléments de renforcement métalliques présentant un diamètre Dh qui est le diamètre du cercle théorique passant par les centres des fils de la couche dans un plan perpendiculaire à l'axe principal du câble et un diamètre D qui est le diamètre extérieur du câble; ou
- ou bien des torons enroulés en hélice autour d'un axe principal, chaque toron comprenant une unique couche constituée de M>1 fils métalliques enroulés en hélice autour d'un axe présentant un diamètre Df avec les éléments de renforcement métalliques présentant un diamètre Dh qui est le diamètre du cercle théorique passant par les centres des fils de la couche dans un plan perpendiculaire à l'axe principal du toron et un diamètre D qui est le diamètre extérieur du toron ;

avec D, Dh et Df exprimés en millimètres :
   - le jeu radial relatif Jr du câble étant tel que 0,10 ≤ Jr ≤ 0,20
avec Jr=N/(π x (D-Df)) x (Dh x Sin(π/N) - (Df / Cos(α x π/180))), α étant l'angle d'hélice, exprimé en degrés, de chaque fil métallique ;
   - la matrice polymérique présente un module élastique sécant MA10 à 10% de déformation % déterminé selon la norme NF ISO 37 de février 2018 allant de 2,5 à 18,0 MPa ;
   - le produit renforcé présente un rapport de module Emax sur Emin tel que 1< Emax/Emin <4 avec Emin étant le module élastique minimum sécant en traction, c'est-à-dire la pente de la droite reliant l'origine de la courbe contrainte-allongement (0% ; 0MPa) obtenue dans les conditions de la norme ASTM D 2969 - 04 de 2014 et Emax étant le module maximum tangent de la même courbe force-allongement; et
   - le produit renforcé présente un allongement structural As tel que 0< As < 1% déterminé par la norme ASTM D2969-04 de 2014.

Les inventeurs à l'origine de l'invention se sont aperçus qu'en fixant la géométrie du câble et notamment son jeu relatif, on pouvait piloter d'une part la rigidité du produit renforcé en jouant sur la rigidité de la matrice polymérique et d'autre part faire varier le comportement bi-module du produit renforcé toujours en jouant sur la rigidité de la matrice polymérique. Ainsi, on peut utiliser un même câble pour différents postes dans le pneumatique en faisant varier la rigidité de la matrice polymérique.

Le produit renforcé selon l'invention permet donc de faire varier de façon importante la rigidité du produit renforcé sans changer de grade d'acier ni varier la masse métal engagée.

Par matrice élastomérique, on entend une matrice à comportement élastomérique issue de la réticulation d'une composition élastomérique. La matrice élastomérique est ainsi à base de la composition élastomérique. Tout comme la matrice élastomérique, le matériau de remplissage est à base d'une composition élastomérique, ici la même composition que celle de la matrice dans laquelle est noyé le câble.

Les valeurs des caractéristiques Dh, D, Df, Dv, Rf et α ainsi que des autres caractéristiques décrites ci-dessous sont mesurées sur ou déterminées à partir des câbles soit directement après fabrication, c'est-à-dire avant toute étape de noyage dans une matrice élastomérique, soit extrait d'une matrice élastomérique, par exemple d'un pneumatique, et ayant alors subit une étape de nettoyage durant laquelle on retire du câble toute matrice élastomérique, notamment tout matériau présent à l'intérieur du câble. Pour garantir un état d'origine, l'interface adhésive entre chaque élément de renforcement métallique et la matrice élastomérique doit être supprimée, par exemple par procédé électro-chimique dans un bain de carbonate de sodium. Les effets associés à l'étape de conformation du procédé de fabrication du pneumatique décrits ci-dessous, notamment l'allongement des câbles, sont annulés par l'extraction de la nappe et du câble qui reprennent, lors de l'extraction, sensiblement leurs caractéristiques d'avant l'étape de conformation.

Le câble selon l'invention comprend une unique couche d'éléments de renforcement métallique enroulés en hélice. En d'autres termes, le câble selon l'invention comprend une seule, pas deux, ni plus de deux couches d'éléments de renforcement métallique enroulés en hélice. La couche est constituée d'éléments de renforcement métallique, c'est-à-dire plusieurs éléments de renforcement métallique, pas d'un seul élément de renforcement métallique. Dans un mode de réalisation du câble, par exemple lorsque le câble est issu de son procédé de fabrication, le câble selon l'invention est constitué de la couche d'éléments de renforcement métallique enroulés, autrement dit le câble ne comprend pas d'autre élément de renforcement métallique que ceux de la couche.

Dans un mode de réalisation, le câble selon l'invention est à simple hélice. Par définition, un câble à simple hélice est un câble dans lequel l'axe de chaque élément de renforcement métallique de la couche décrit une unique hélice, contrairement à un câble à double hélice dans lequel l'axe de chaque élément de renforcement métallique décrit une première hélice autour de l'axe du câble et une deuxième hélice autour d'une hélice décrite par l'axe du câble. En d'autres termes, lorsque le câble s'étend selon une direction sensiblement rectiligne, le câble comprend une unique couche d'éléments filaires métallique enroulés ensemble en hélice, chaque élément de renforcement métallique de la couche décrivant une trajectoire en forme d'hélice autour d'un axe principal sensiblement parallèle à la direction sensiblement rectiligne de sorte que, dans un plan de coupe sensiblement perpendiculaire à l'axe principal, la distance entre le centre de chaque élément de renforcement métallique de la couche et l'axe principal soit sensiblement constante et égale pour tous les éléments de renforcement métallique de la couche. Au contraire, lorsqu'un câble à double hélice s'étend selon une direction sensiblement rectiligne, la distance entre le centre de chaque élément de renforcement métallique de la couche et la direction sensiblement rectiligne est différente pour tous les éléments de renforcement métallique de la couche.

Dans un autre mode de réalisation, le câble selon l'invention est à double hélice.

Le câble selon l'invention est dépourvu d'âme centrale métallique. On parle également de câble de structure 1xN ou bien encore de câble à structure ouverte (« open-cord » en anglais). Dans le câble selon l'invention défini ci-dessus, la voûte interne est vide et donc dépourvue de tout matériau de remplissage, notamment dépourvue de toute composition élastomérique. On parle alors d'un câble dépourvu de matériau de remplissage.

La voûte du câble selon l'invention est délimitée par les éléments de renforcement métallique et correspond au volume délimité par un cercle théorique, d'une part, radialement intérieur à chaque élément de renforcement métallique et, d'autre part, tangent à chaque élément de renforcement métallique. Le diamètre de ce cercle théorique est égal au diamètre de voûte Dv.

Par élément filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément de renforcement métallique présente une section circulaire.

Par métallique, on entend par définition un élément filaire constitué majoritairement (c'est-à-dire pour plus de 50% de sa masse) ou intégralement (pour 100% de sa masse) d'un matériau métallique. Chaque élément de renforcement métallique est préférentiellement en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome).

L'allongement structural As, grandeur bien connue de l'homme du métier, est déterminé par exemple en appliquant la norme ASTM D2969-04 de 2014 à un produit renforcé testé de façon à obtenir une courbe force-allongement. On déduit l'As sur la courbe obtenue comme l'allongement, en %, correspondant au point d'intersection de la tangente à la partie élastique de la courbe force-allongement avec l'axe des allongements. Pour rappel, une courbe force allongement comprend, en se déplaçant vers les allongements croissants, une partie structurale, une partie élastique et une partie plastique. La partie structurale correspond à un allongement structural du câble résultant du rapprochement des différents éléments de renforcement métallique constituants le câble. Dans certains modes de réalisation, la couche des N éléments de renforcement métallique se déstructure à l'issue de la partie structurale, du fait du jeu radial relatif Jr relativement faible, occasionnant une hausse ponctuelle du module du câble. La partie élastique correspond à un allongement élastique résultant de la construction du câble, notamment des angles des différentes couches et des diamètres des fils. La partie plastique correspond à l'allongement plastique résultant de la plasticité (déformation irréversible au-delà de la limite d'élasticité) d'un ou plusieurs éléments de renforcement métallique du produit renforcé.

Le jeu radial relatif Jr est représentatif de la distance séparant chaque paire d'éléments filaires métalliques adjacents ramenée à la longueur disponible pour positionner les éléments filaires métalliques sur la couche. Ainsi, plus Jr est élevé, plus l'espace séparant deux éléments filaires métalliques adjacents est élevé par rapport au nombre maximal d'éléments filaires métalliques que la couche pourrait accueillir. A l'inverse, plus Jr est petit, plus l'espace séparant deux éléments filaires métalliques adjacents est petit par rapport au nombre maximal d'éléments filaires métalliques que la couche pourrait accueillir. Dans l'intervalle selon l'invention, Jr permet de maximiser le nombre d'éléments filaires métalliques présents sur la couche et donc la capacité de renforcement du câble sans toutefois détériorer la capacité d'accommodation des déformations de compression longitudinale.

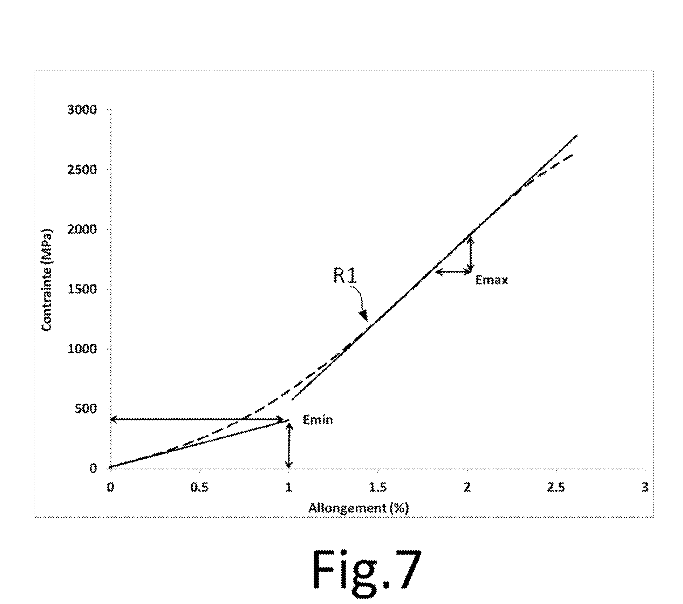

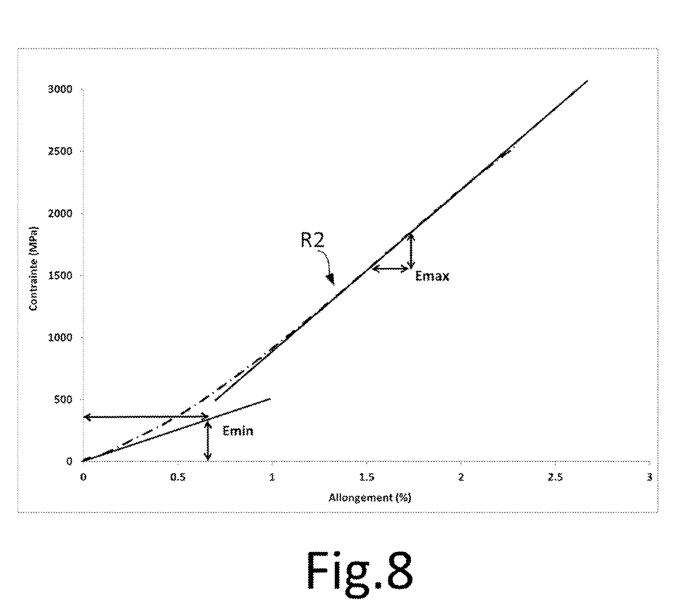

Le rapport Emax/Emin est déterminé à partir de la courbe force-allongement obtenue dans les conditions de la norme ASTM D 2969 - 04 de 2014 tel que représenté sur les figures 7 et 8.

Emin est le module élastique minimum sécant en traction, c'est-à-dire la pente de la droite reliant l'origine de la courbe contrainte-allongement (0% ; 0MPa) obtenue dans les conditions de la norme ASTM D 2969 - 04 de 2014, exprimé en GPa.

Emax est le module maximum tangent de cette même courbe force-allongement, exprimé en GPa.

L'angle d'hélice α est une grandeur bien connue de l'homme du métier et peut être déterminé par le calcul itératif suivant comprenant 3 itérations et dans lequel l'indice i indique le numéro de l'itération 1, 2 ou 3. Connaissant l'allongement structural As exprimé en %, l'angle d'hélice α(i) est tel que α(i)=Arcos [ (100/(100+As) x Cos [ Arctan ( (π x Df) / (P x Cos(α(i-1)) x Sin(π/N)) ] ], formule dans laquelle P est le pas exprimé en millimètres auquel chaque élément de renforcement métallique est enroulé, N est le nombre d'éléments de renforcement métallique de la couche, Df est le diamètre de chaque élément de renforcement métallique exprimé en millimètres, Arcos, Cos et Arctan et Sin désignant respectivement les fonctions arcosinus, cosinus, arctangente et sinus. Pour la première itération, c'est-à-dire pour le calcul de α(1), on prend α(0)=0. A la troisième itération, on obtient α(3)=α avec au moins un chiffre significatif après la virgule quand α est exprimé en degrés.

Le diamètre d'hélice Dh, exprimé en millimètres, est calculé selon la relation Dh=P x Tan(α) / π dans laquelle P est le pas exprimé en millimètres auquel chaque élément de renforcement métallique est enroulé, α est l'angle d'hélice de chaque élément de renforcement métallique déterminé ci-dessus et Tan la fonction tangente. Le diamètre d'hélice Dh correspond au diamètre du cercle théorique passant par les centres des éléments de renforcement métallique de la couche dans un plan perpendiculaire à l'axe du câble.

Le diamètre de voûte Dv, exprimé en millimètres, est calculé selon la relation Dv=Dh-Df dans laquelle Df est le diamètre de chaque élément de renforcement métallique et Dh le diamètre d'hélice, tous deux exprimés en millimètres.

Le diamètre ou diamètre apparent, noté D du câble lorsque les éléments de renforcement métalliques sont des fils , est mesuré au moyen d'un comparateur d'épaisseur dont le diamètre des touches est au moins égal à 1,5 fois le pas P d'enroulage des éléments filaires (on peut citer par exemple le modèle JD50 de la marque KAEFER permettant d'atteindre une précision de 1/100 de millimètre, équipé de touche type a, et ayant une pression de contact proche de 0,6N). Le protocole de mesure consiste en trois répétitions d'une série de trois mesures (effectuées perpendiculairement à l'axe du câble et sous tension nulle) dont la seconde et la troisième de ces mesures sont réalisées selon une direction décalée angulairement de la précédente d'un tiers de tour, par la rotation de la direction de mesure autour de l'axe du câble.

Le diamètre ou diamètre apparent, noté D du toron lorsque les éléments de renforcement sont des torons, est mesuré en calant le câble entre deux barreaux parfaitement rectilignes de longueur 200 mm et en mesurant l'espacement dans lequel le câble est enchâssé moyennant le comparateur décrit ci- après. On peut citer par exemple le modèle JD50/25 de la marque KAEFER permettant d'atteindre une précision de 1/100 de millimètre, équipé de touche type a, et ayant une pression de contact proche de 0,6N. Le protocole de mesure consiste en trois répétitions d'une série de trois mesures (effectuées perpendiculairement à l'axe du câble et sous tension nulle).

On rappelle que le pas auquel chaque élément de renforcement métallique est enroulé est la longueur parcourue par cet élément filaire, mesurée parallèlement à l'axe du câble dans lequel il se trouve, au bout de laquelle l'élément filaire ayant ce pas effectue un tour complet autour dudit axe du câble.

Les caractéristiques optionnelles décrites ci-dessous pourront être combinées les unes avec les autres dans la mesure où de telles combinaisons sont techniquement compatibles.

Dans un mode de réalisation avantageux, tous les fils métalliques présentent le même diamètre Df.

Le câble du produit renforcé selon l'invention est fabriqué conformément à un procédé et en mettant en oeuvre une installation décrits dans les documents WO2016083265 et WO2016083267. Un tel procédé mettant en oeuvre une étape de fractionnement est à distinguer d'un procédé de câblage classique comprenant une unique étape d'assemblage dans lequel les éléments de renforcement métallique sont enroulés en hélice, l'étape d'assemblage étant précédée d'une étape de préformation des éléments de renforcement métallique afin notamment d'augmenter la valeur de l'allongement structural. De tels procédés et installations sont décrits dans les documents EP0548539, EP1000194, EP0622489 ou encore EP0143767. Lors de ces procédés, afin d'obtenir l'allongement structural le plus élevé possible, on préforme individuellement les monofilaments métalliques. Toutefois, cette étape de préformation individuelle des monofilaments métalliques, qui nécessite une installation particulière, d'une part, rend le procédé relativement peu productif par rapport à un procédé dépourvu d'étape de préformation sans pour autant permettre d'atteindre des allongements structuraux élevés et, d'autre part, altère les monofilaments métalliques ainsi préformés en raison des frottements avec les outils de préformation. Une telle altération crée des amorces de ruptures en surface des monofilaments métalliques et est donc néfaste pour l'endurance des monofilaments métalliques, notamment pour leur endurance en compression. L'absence ou la présence de telles marques de préformation est observable au microscope électronique à l'issue du procédé de fabrication, ou bien plus simplement, en connaissant le procédé de fabrication du câble.

Par définition, le MA10 est le module d'élasticité sécant en traction d'une matrice polymérique vulcanisée mesuré à 10% d'allongement à partir d'une courbe contrainte allongement réalisée selon les préconisations de la norme NF ISO 37 de février 2018. Il s'agit du module élastique du mélange mesuré lors d'une expérience de traction uniaxiale, à une valeur d'allongement de 0.1 (soit 10% d'allongement, exprimé en pourcentage). On impose une vitesse constante de traction uniaxiale à l'éprouvette, et on mesure son allongement et l'effort. La mesure est réalisée à l'aide d'une machine de traction de type INSTRON, à une température de 23°C, et une humidité relative de 50% (Norme ISO 23529). Les conditions de mesurage et d'exploitation des résultats pour déterminer l'allongement et la contrainte sont tels que décrits dans la norme NF ISO 37: 2018-02. On détermine la contrainte pour un allongement de 0.1 et on calcule le module élastique à 10% en faisant le rapport de cette valeur de contrainte sur la valeur d'allongement. L'homme du métier saura choisir et adapter les dimensions de l'éprouvette en fonction de la quantité de mélange accessible et disponible en particulier dans le cas de prélèvements d'éprouvette dans un produit fini tel que le pneumatique.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par coupe radiale ou section radiale on entend ici une coupe ou une section selon un plan qui comporte l'axe de rotation du pneumatique.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Le plan médian (noté M) est le plan perpendiculaire à l'axe de rotation du pneumatique qui est situé à mi-distance des deux bourrelets et passe par le milieu de l'armature de sommet.

Le plan circonférentiel équatorial (noté E) du pneumatique est le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales), l'axe parallèle à l'axe de rotation du pneumatique et situé à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Avantageusement, les éléments de renforcements métalliques définissent une voûte interne du câble de diamètre Dv, chaque élément de renforcement métallique présentant un diamètre Df et un rayon de courbure d'hélice Rf défini par Rf=P/(π x Sin(2α)) avec P le pas de chaque élément de renforcement métallique exprimé en millimètres et α l'angle d'hélice de chaque élément de renforcement métallique (54) et Dv=Dh-Df, dans lequel Dv, Dh et Df étant exprimés en millimètres :
1,30 ≤ Dv / Df ≤ 4,50 et de préférence 1,60 ≤ Dv/Df ≤ 3,20.

Le rayon de courbure Rf, exprimé en millimètres, est calculé selon la relation Rf=P/(π x Sin(2α)) dans laquelle P est le pas exprimé en millimètres de chaque élément de renforcement métallique, α est l'angle d'hélice de chaque élément de renforcement métallique et Sin la fonction sinus.

Avantageusement, 9 ≤ Rf/Df ≤ 30.

De préférence, l'allongement total At >1,5 % déterminé par la norme ASTM D2969-04 de 2014.

Avantageusement, le diamètre d'hélice Dh de chaque élément de renforcement métallique (54) est tel que 0,70 mm ≤ Dh ≤ 1,60 mm, de préférence 0,75 mm ≤ Dh ≤ 1,60 mm et plus préférentiellement 0,80 mm ≤ Dh ≤ 1,60 mm.

Avantageusement, Df est tel que 0,10 mm ≤ Df ≤ 0,50 mm, de préférence 0,15 mm ≤ Df ≤ 0,50 mm et plus préférentiellement 0,15 mm ≤ Df ≤ 0,45 mm.

Avantageusement, Dv est tel que Dv ≥ 0,40 mm, de préférence 0,50 mm ≤ Dv ≤ 1,20 mm.

De préférence, chaque élément de renforcement métallique est enroulé à un pas P tel que 3 mm ≤ P ≤ 15 mm, de préférence 5 mm ≤ P ≤ 13 mm et plus préférentiellement 7 mm ≤ P ≤ 11 mm. On peut également constater que le produit renforcé selon l'invention permet une plage de réglage de la rigidité du produit renforcé plus étendue qu'avec d'autres câbles élastiques en faisant varier le pas du tissu.

Avantageusement, le diamètre du câble ou du toron D ≤ 2,10 mm, de préférence 0,90 mm ≤ D ≤ 2,10 mm et plus préférentiellement 0,95 mm ≤ D ≤ 2,05 mm.

Dans un premier mode de réalisation préféré, chaque élément de renforcement métallique du câble est un fil métallique avec N va de 3 à 18 et de préférence de 4 à 15.

Dans un deuxième mode de réalisation préféré, chaque élément de renforcement métallique du câble est un toron avec N va de 3 à 5, M va de 3 à 18 et de préférence de 4 à 15.

Dans ce deuxième mode de réalisation préféré, avantageusement, les torons définissent une voûte interne du câble de diamètre Dvc, chaque toron présentant un diamètre D et un rayon de courbure d'hélice Rt défini par Rt=Pe/(π x Sin(2αe)) avec Pe le pas de chaque toron exprimé en millimètres et αe l'angle d'hélice de chaque toron (T), Dvc, D et Rt étant exprimés en millimètres, le câble satisfait les relations suivantes : 5 ≤ Rt / D ≤ 750 et 0,10 ≤ Dvc / D ≤ 0,50.

Le câble du produit renforcé selon ce deuxième mode de réalisation présente une excellente compressibilité longitudinale et, toutes choses étant égales par ailleurs, un diamètre relativement faible.

D'une part, les inventeurs à l'origine de l'invention émettent l'hypothèse que, du fait d'un rayon de courbure Rt suffisamment élevé par rapport au diamètre D de chaque toron, le câble est suffisamment aéré, réduisant ainsi le risque de flambement, du fait de l'éloignement relativement important de chaque toron de l'axe longitudinal du câble, éloignement permettant aux torons une accommodation, de par leur hélice, des déformations de compression longitudinale relativement élevées. Au contraire, le rayon de courbure Rt de chaque toron du câble de l'état de la technique étant relativement faible par rapport au diamètre D, les éléments filaires métalliques sont plus proches de l'axe longitudinal du câble et peuvent accommoder, de par leur hélice, des déformations de compression longitudinale bien moindres.

D'autre part, pour un rayon de courbure Rt de chaque toron trop élevé, le câble selon l'invention présenterait une rigidité longitudinale en compression insuffisante pour assurer un rôle de renforcement, par exemple de pneumatiques.

De plus, pour un diamètre Dvc de voûte interne trop élevé, le câble présenterait, relativement au diamètre des torons, un diamètre trop élevé.

Les valeurs des caractéristiques Dt, Dvc et Rt ainsi que des autres caractéristiques décrites ci-dessus sont mesurées sur ou déterminées à partir des câbles soit directement après fabrication, c'est-à-dire avant toute étape de noyage dans une matrice élastomérique, soit extrait d'une matrice élastomérique, par exemple d'un pneumatique, et ayant alors subit une étape de nettoyage durant laquelle on retire du câble toute matrice élastomérique, notamment tout matériau présent à l'intérieur du câble. Pour garantir un état d'origine, l'interface adhésive entre chaque élément filaire métallique et la matrice élastomérique doit être supprimée, par exemple par procédé électro-chimique dans un bain de carbonate de sodium. Les effets associés à l'étape de conformation du procédé de fabrication du pneumatique décrits ci-dessous, notamment l'allongement des câbles, sont annulés par l'extraction de la nappe et du câble qui reprennent, lors de l'extraction, sensiblement leurs caractéristiques d'avant l'étape de conformation.

La voûte du câble du produit renforcé selon ce deuxième mode de réalisation est délimitée par les torons et correspond au volume délimité par un cercle théorique, d'une part, radialement intérieur à chaque toron et, d'autre part, tangent à chaque toron. Le diamètre de ce cercle théorique est égal au diamètre de voûte Dvc.

L'angle d'hélice de chaque toron αe est une grandeur bien connue de l'homme du métier et peut être déterminé par le calcul suivant : tan αe = 2xπ x Re/Pe, formule dans laquelle Pe est le pas exprimé en millimètres dans lequel chaque toron est enroulé, Re est le rayon d'hélice de chaque toron exprimé en millimètres, et tan désigne la fonction tangente. αe est exprimé en degrés.

Le diamètre d'hélice De, exprimé en millimètres, est calculé selon la relation De=Pe x Tan(αe) / π dans laquelle Pe est le pas exprimé en millimètres auquel chaque toron est enroulé, αe est l'angle d'hélice de chaque toron déterminé ci-dessus et Tan la fonction tangente. Le diamètre d'hélice De correspond au diamètre du cercle théorique passant par les centres des torons de la couche dans un plan perpendiculaire à l'axe principal du câble.

Le diamètre de voûte Dvc, exprimé en millimètres, est calculé selon la relation Dvc=De-D dans laquelle t est le diamètre de chaque toron et De le diamètre d'hélice, tous deux exprimés en millimètres.

Le rayon de courbure Rt, exprimé en millimètres, est calculé selon la relation Rt=Pe/(π x Sin(2αe)) dans laquelle Pe est le pas exprimé en millimètres de chaque toron, αe est l'angle d'hélice de chaque toron et Sin la fonction sinus.

On rappelle que le pas auquel chaque toron est enroulé est la longueur parcourue par cet élément filaire, mesurée parallèlement à l'axe du câble dans lequel il se trouve, au bout de laquelle toron ayant ce pas effectue un tour complet autour dudit axe du câble.

Dans ce deuxième de réalisation préféré, avantageusement, le pas de chaque toron Pe va de 20 mm à 120 mm.

### PNEUMATIQUE SELON L'INVENTION

L'invention a également pour objet un pneumatique comprenant au moins un produit renforcé tel que défini ci-dessus.

De préférence, le pneumatique comprend un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement, l'armature de sommet comprenant au moins un produit renforcé tel que défini ci-dessus.

De préférence, l'armature de sommet comprend une armature de frettage comprenant au moins une nappe de frettage et préférentiellement une unique nappe de frettage. L'armature de frettage est constituée préférentiellement par une nappe de frettage. Ce mode de réalisation est particulièrement approprié à un pneumatique est tout particulièrement destiné à des véhicules industriels choisis parmi des véhicules lourds tels que "Poids lourd" - i.e., métro, bus, engins de transport routier (camions, tracteurs, remorques), véhicules horsla-route -, engins agricoles ou de génie civil, autres véhicules de transport ou de manutention.

De préférence, l'armature de sommet comprend une armature de travail comprenant au moins une nappe de travail.

Dans les applications de type poids-lourd pour transport de charge, l'armature de frettage comprend usuellement une nappe de frettage réalisée par l'enroulement circonférentiel d'un fil de frettage ou d'une bande de frettage continue en formant, avec la direction circonférentielle, des angles au plus égaux à 5°.

Dans un mode de réalisation, l'armature de frettage est radialement intercalée entre les deux armatures de travail.

Avantageusement, la nappe de frettage comprend au moins un produit renforcé tel que défini ci-dessus.

De manière préférentielle, le pneumatique est pour véhicule de type poids lourd. Ainsi, le pneumatique présente une dimension dans laquelle le diamètre, en pouces, du siège de la jante sur laquelle le pneumatique est destiné à être monté est supérieur ou égal à 20 pouces.

L'invention sera mieux comprise à la lecture des exemples qui vont suivre, donnés uniquement à titre d'exemples non limitatifs et faite en se référant aux dessins dans lesquels :
- la figure 1 est une vue en coupe perpendiculaire à la direction circonférentielle d'un pneumatique selon l'invention ;
- la figure 2 est une vue de détails de la zone II de la figure 1 ;
- la figure 3 est une vue en coupe d'un produit renforcé (R) selon l'invention ;
- la figure 4 est une vue schématique en coupe perpendiculaire à l'axe du câble (supposé rectiligne et au repos) d'un câble (50) du produit renforcé (R) selon un premier mode de réalisation de l'invention ;
- la figure 5 est une vue analogue à celle de la figure 4 d'un câble (50') du produit renforcé (R) selon un deuxième mode de réalisation l'invention ;
- la figure 6 illustre des courbes contrainte-allongement pour des produits renforcés ( R1 ; R1' ; R1"; R1"') selon un premier mode de l'invention comprenant le câble (50);
- la figure 7 illustre une partie de la courbe contrainte-allongement pour un produit renforcé ( R1) selon un premier mode de l'invention comprenant le câble (50) et représente schématiquement les modules Emin et Emax ; et
- la figure 8 illustre une partie de la courbe contrainte-allongement pour un produit renforcé ( R2) selon un deuxième mode de l'invention comprenant le câble (50') et représente schématiquement les modules Emin et Emax.

### EXEMPLE DE PNEUMATIQUE SELON L'INVENTION

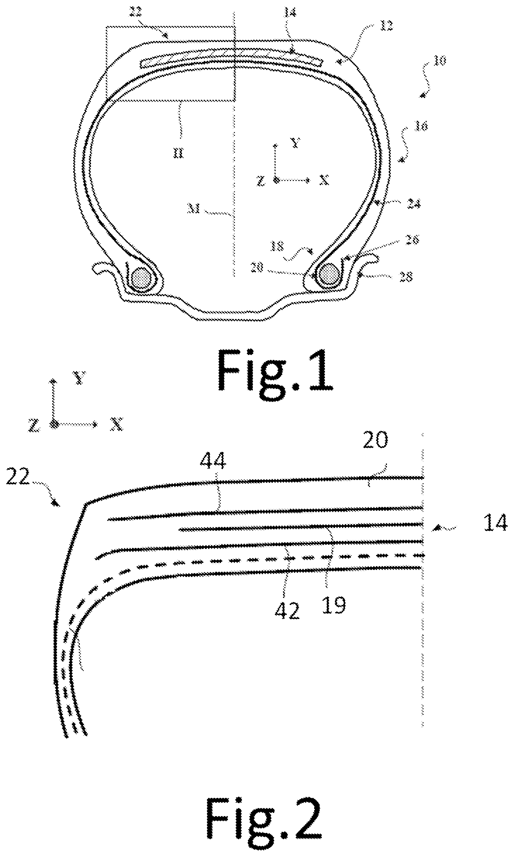

Dans les figures 1 et 2, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

On a représenté sur les figures 1 et 2 un pneumatique selon l'invention et désigné par la référence générale P.

Le pneumatique P est pour véhicule lourd de type poids lourd. Ainsi, le pneumatique P présente une dimension de type 315/70 R 22.5.

Le pneumatique P comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux (non représentés). Les câbles de carcasse sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique P comprend également une nappe d'étanchéité 32 constituée d'un élastomère (communément appelée gomme intérieure) qui définit la face radialement interne 34 du pneumatique P et qui est destinée à protéger la nappe de carcasse 30 de la diffusion d'air provenant de l'espace intérieur au pneumatique P.

L'armature de sommet 14 comprend, radialement de l'extérieur vers l'intérieur du pneumatique P, une armature de travail 38 agencée radialement à l'intérieur de la bande de roulement 22.

L'armature de travail 38 comprend des première et deuxième nappes de travail 46, 48, la première nappe 46 formée de câbles métalliques orientés d'un angle égal à 20° ; une armature de frettage 17 comprenant une unique nappe de frettage 19 comprenant un produit renforcé tel que décrit ci-dessous et une deuxième nappe de travail 48 formée de câbles métalliques orientés d'un angle égal à 44°, croisés avec les câbles métalliques de la première nappe de travail 46, les câbles de chacune des couches de travail 46, 48 étant orientés de part et d'autre de la direction circonférentielle.

L'armature de sommet 14 est surmontée de la bande de roulement 20.

### EXEMPLE DE PRODUIT RENFORCE SELON L'INVENTION

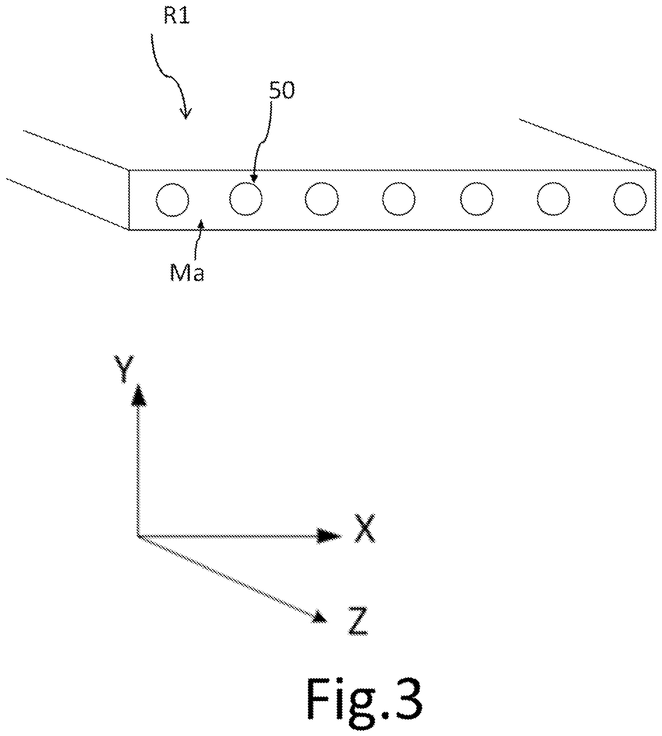

On a représenté sur la figure 3 un produit renforcé selon l'invention et désigné par la référence générale R. Le produit renforcé R comprend au moins un câble 50, en l'espèce plusieurs câbles 50, noyés dans la matrice polymérique Ma.

Sur la figure 3, on a représenté la matrice polymérique Ma, les câbles 50 dans un repère X, Y, Z dans lequel la direction Y est la direction radiale et les directions X et Z sont les directions axiale et circonférentielle. Sur la figure 3, le produit renforcé R comprend plusieurs câbles 50 agencés côte à côte selon la direction principale X et s'étendant parallèlement les uns aux autres au sein du produit renforcé R et noyés collectivement dans la matrice polymérique Ma.

Ici, la matrice polymérique Ma est une matrice élastomérique à base d'une composition élastomérique.

La matrice polymérique présente un module élastique sécant MA10 à 10% de déformation déterminé selon la norme NF ISO 37 de février 2018 allant de 2,5 à 18,0 MPa. Ici pour le produit renforcé R1, il est de 2,5 MPa.

Le produit renforcé R est le produit renforcé R1 et présente un rapport de module Emax sur Emin tel que 1< Emax/Emin <4 avec Emin étant module élastique minimum sécant en traction, c'est-à-dire la pente de la droite reliant l'origine de la courbe contrainte-allongement (0% ; 0MPa) obtenue dans les conditions de la norme ASTM D 2969 - 04 de 2014 et Emax étant le module maximum tangent de la même courbe force-allongement représentée sur la figure 7.
Ici Emin= 46 GPa.
Ici Emax=134 GPa.

Et Emax/Emin = 2,9 compris entre 1 et 4.

Le produit renforcé R1 présente un allongement structural As tel que 0< As < 1% déterminé par la norme ASTM D2969-04 de 2014.

Ici As= 0,6%.

### CABLE DU PRODUIT RENFORCE SELON UN PREMIER MODE DE REALISATION DE L'INVENTION

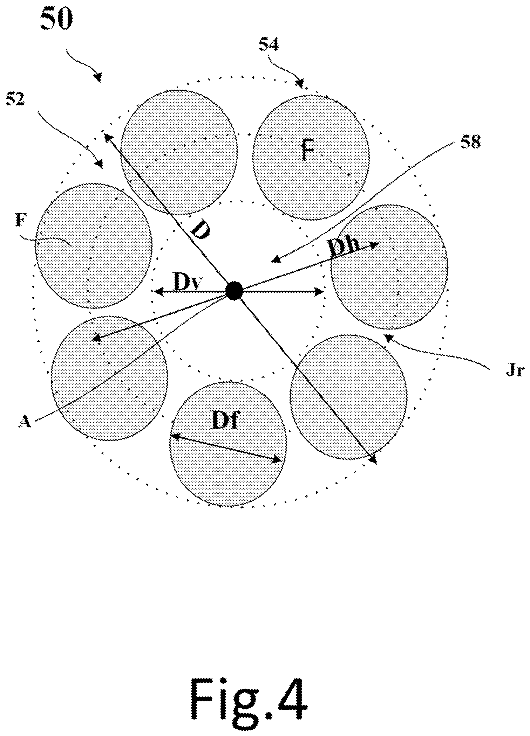

On a représenté sur la figure 4 le câble 50 selon un premier mode de réalisation du produit renforcé de l'invention.

Le câble 50 comprend une unique couche constituée de N = 7 éléments de renforcements métalliques 54 enroulés en hélice, chaque élément de renforcement métallique 54 de la couche 52 décrivant, lorsque le câble 50 s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément de renforcement métallique 54 de la couche 52 et l'axe principal (A) est sensiblement constante et égale pour tous les éléments de renforcements métalliques 54 de la couche 52, les éléments de renforcement métalliques 54 étant des fils métalliques F (ici 7 fils métalliques) présentant un diamètre Df avec les éléments de renforcement métalliques 54 présentant un diamètre Dh qui est le diamètre du cercle théorique passant par les centres des fils F de la couche dans un plan perpendiculaire à l'axe principal du câble et un diamètre D qui est le diamètre extérieur du câble 50 avec D, Dh et Df exprimés en millimètres : $- 0 , 10 \leq Jr \leq 0,20$ Avec Jr=N/(π x (D-Df)) x (Dh x Sin(π/N) - (Df / Cos(α x π/180))), α étant l'angle d'hélice, exprimé en degrés, de chaque fil métallique F.

Ici Jr=0,19.

### CABLE DU PRODUIT RENFORCE SELON UN DEUXIEME MODE DE REALISATION DE L'INVENTION

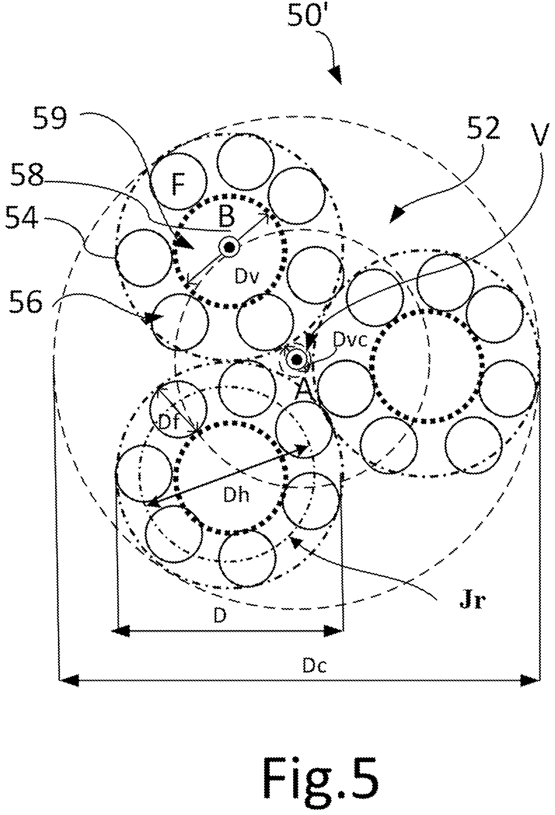

On a représenté sur la figure 5 le câble 50' selon un deuxième mode de réalisation du produit renforcé de l'invention.

Le câble 50' comprend une unique couche constituée de N = 3 éléments de renforcements métalliques 54 enroulés en hélice, chaque élément de renforcement métallique 54 de la couche 52 décrivant, lorsque le câble 50' s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément de renforcement métallique 54 de la couche 52 et l'axe principal (A) est sensiblement constante et égale pour tous les éléments de renforcements métalliques 54 de la couche 52, les éléments de renforcement métallique 54 étant des torons T ( ici 3 torons) enroulé en hélice autour d'un axe principal (A), chaque toron T comprenant une unique couche 56 constituée de M>1 de fils métalliques FT enroulés en hélice autour d'un axe (B) présentant un diamètre Df avec les éléments de renforcement métalliques 54 présentant un diamètre Dh qui est le diamètre du cercle théorique passant par les centres des fils FT de la couche 56 dans un plan perpendiculaire à l'axe principal du toron T et un diamètre D qui est le diamètre extérieur du toron T avec D, Dh et Df exprimés en millimètres : $- 0 , 10 \leq Jr \leq 0,20$ Avec Jr=N/(π x (D-Df)) x (Dh x Sin(π/N) - (Df / Cos(α x π/180))), α étant l'angle d'hélice, exprimé en degrés, de chaque fil métallique F.

Ici Jr=0,19.

### PROCEDE DE FABRICATION DU PRODUIT RENFORCE SELON LE PREMIER MODE DE REALISATION DE L'INVENTION

Le câble 50 du produit renforcé R1 selon le premier mode de réalisation est produit selon le procédé décrit dans la demande WO 2020/021006 en mettant en oeuvre une installation décrite dans les documents WO2016083265 et WO2016083267.

Le produit renforcé R1 est ensuite obtenu par noyage du câble 50 dans une matrice polymérique Ma. Ici, la matrice polymérique Ma est une matrice élastomérique.

### PROCEDE DE FABRICATION DU PRODUIT RENFORCE SELON LE DEUXIEME MODE DE REALISATION DE L'INVENTION

Le câble 50' du produit renforcé R2 selon le deuxième mode de réalisation est produit selon le procédé décrit dans la demande WO2021140287.

Le produit renforcé R2 est ensuite obtenu par noyage du câble 50' dans une matrice polymérique Ma. Ici, la matrice polymérique Ma est une matrice élastomérique.

### TESTS COMPARATIFS

On a résumé dans les tableaux 1 et 2 ci-dessous les caractéristiques pour les produits renforcés des premier et deuxième mode de réalisation de l'invention.

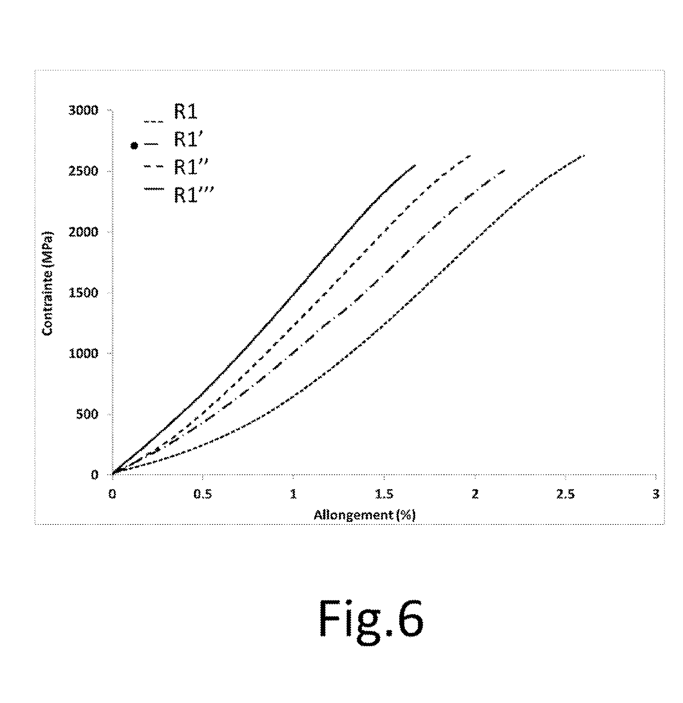

On a tracé les courbes contrainte-allongement des produits renforcés R1, R1', R1" et R1‴ avec le câble 50 selon le premier mode de réalisation de l'invention en appliquant la norme ASTM D 2969 - 04 de 2014 telles que représentées sur la figure 6 et on a déterminé le rapport Emax/Emin tel que déterminé sur la figure 7 pour R1, ainsi que l'allongement structural As.

On a rassemblé les résultats dans le tableau 1 ci-dessous.

**[Tableau 1]**

| Produit renforcé | R1 | R1' | R1" | R1‴ |
|---|---|---|---|---|
| câble | 50 | 50 | 50 | 50 |
| N/ sens câble | 7/S | 7/S | 7/S | 7/S |
| Df(mm) | 0,26 | 0,26 | 0,26 | 0,26 |
| Dh (mm) | 0,78 | 0,78 | 0,78 | 0,78 |
| D (mm) | 1,13 | 1,13 | 1,13 | 1,13 |
| α (°) | 17,4 | 17,4 | 17,4 | 17,4 |
| Jr | 0,19 | 0,19 | 0,19 | 0,19 |
| MA10 (Mpa) | 2,5 | 6,0 | 10,7 | 18,0 |
| As (%) | 0,6 | 0,2 | 0,2 | 0,2 |
| Dv (mm) | 0,52 | 0,52 | 0,52 | 0,52 |
| Rf (mm) | 4,35 | 4,35 | 4,35 | 4,35 |
| P (mm) | 7,8 | 7,8 | 7,8 | 7,8 |
| Dv/Df | 1,99 | 1,99 | 1,99 | 1,99 |
| Rf/Df | 16,7 | 16,7 | 16,7 | 16,7 |
| At % | 2,6 | 2,2 | 2,0 | 1,7 |
| E min (GPa) | 46 | 80 | 98 | 135 |
| Emax (GPa) | 134 | 134 | 150 | 171 |
| Emax/Emin | 2,9 | 1,7 | 1,5 | 1,3 |

On a tracé la courbe contrainte-allongement du produit renforcé R2 avec le câble 50' selon le deuxième mode de réalisation de l'invention en appliquant la norme ASTM D 2969 - 04 de 2014 et on a déterminé le rapport Emax/Emin tel que représenté sur la figure 8, ainsi que l'allongement structural As.

On a également déterminé le rapport Emax/Emin, ainsi que l'allongement structural As pour le produit renforcé R2'.

On a rassemblé les résultats dans le tableau 2 ci-dessous pour les produits renforcés R2 et R2'.

**[Tableau 2]**

| Produit renforcé | R2 | R2' |
|---|---|---|
| câble | 50' | 50' |
| N/ sens câble | 3/Z | 3/Z |
| M / sens toron T | 7/S | 7/S |
| Dvc (mm) | 0,18 | 0,18 |
| Pe (mm) | 80 | 80 |
| αe (°) | 2,9 | 2,9 |
| Rt (mm) | 249 | 249 |
| Df(mm) | 0,26 | 0,26 |
| Dh (mm) | 0,78 | 0,78 |
| D (mm) | 1,13 | 1,13 |
| α (°) | 17,4 | 17,4 |
| Jr | 0,19 | 0,19 |
| MA10 (Mpa) | 10,7 | 2,5 |
| As (%) | 0,3 | 1 |
| Dv (mm) | 0,52 | 0,52 |
| Rf (mm) | 4,35 | 4,35 |
| P (mm) | 7,8 | 7,8 |
| Rt/D | 220 | 220 |
| Dvc/D | 0,16 | 0,16 |
| Dv/Df | 1,99 | 1,99 |
| Rf/Df | 16,7 | 16,7 |
| At % | 2,6 | 3,1 |
| E min (GPa) | 60 | 30 |
| Emax (GPa) | 132 | 110 |
| Emax/Emin | 2,2 | 3.7 |

Les tableaux 1 et 2 montrent que, les produits renforcés R1, R1', R1", R1"', R2 et R2' selon l'invention présentent un produit renforcé utilisant un câble à géométrie prédéterminée notamment du fait de son jeu relatif Jr dont on peut piloter la rigidité et le comportement bi-module en modifiant la matrice polymérique sans opérer de modification du câble.

Ainsi, les produits renforcés selon l'invention permettent de résoudre les problèmes évoqués en préambule.

L'invention ne se limite pas aux modes de réalisation précédemment décrits.

## Revendications

1. Produit renforcé (R), comprenant une matrice polymérique (Ma) et au moins un câble (50 ; 50') comprenant une unique couche (52) constituée de N éléments de renforcements métalliques (54) enroulés en hélice, chaque élément de renforcement métallique (54) de la couche (52) décrivant, lorsque le câble (50; 50') s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément de renforcement métallique (54) de la couche (52) et l'axe principal (A) est sensiblement constante et égale pour tous les éléments de renforcements métalliques (54) de la couche (52), les éléments de renforcement métalliques (54) étant :
- ou bien des fils métalliques (F) présentant un diamètre Df, avec les éléments de renforcement métalliques (54) présentant un diamètre Dh qui est le diamètre du cercle théorique passant par les centres des fils (F) de la couche dans un plan perpendiculaire à l'axe principal du câble et un diamètre D qui est le diamètre extérieur du câble (50);
- ou bien des torons (T) enroulés en hélice autour d'un axe principal (A), chaque toron (T) comprenant une unique couche (56) constituée de M>1 fils métalliques (FT) enroulés en hélice autour d'un axe (B) présentant un diamètre Df avec les éléments de renforcement métalliques (54) présentant un diamètre Dh qui est le diamètre du cercle théorique passant par les centres des fils (FT) de la couche (56) dans un plan perpendiculaire à l'axe principal du toron (T) et un diamètre D qui est le diamètre extérieur du toron (T) ;
avec D, Dh et Df exprimés en millimètres :
- le jeu radial relatif Jr du câble étant tel que : 0,10 ≤ Jr ≤ 0,20 avec Jr=N/(π x (D-Df)) x (Dh x Sin(π/N) - (Df / Cos(α x π/180))), α étant l'angle d'hélice, exprimé en degrés, de chaque fil métallique (F) ;
- la matrice polymérique (Ma) présente un module élastique sécant MA10 à 10% de déformation déterminé selon la norme NF ISO 37 de février 2018 allant de 2,5 à 18,0 MPa ; **caractérisé en ce que** :
- le produit renforcé (R) présente un rapport de module Emax sur Emin tel que 1< Emax/Emin <4 avec Emin étant le module élastique minimum sécant en traction, c'est-à-dire la pente de la droite reliant l'origine de la courbe contrainte-allongement (0% ; 0MPa) obtenue dans les conditions de la norme ASTM D 2969 - 04 de 2014 et Emax étant le module maximum tangent de la même courbe force-allongement; et
- le produit renforcé (R) présente un allongement structural As tel que 0< As < 1% déterminé par la norme ASTM D2969-04 de 2014.

2. Produit renforcé (R) selon la revendication précédente, dans lequel les éléments de renforcements métalliques (54) définissant une voûte interne (58) du câble de diamètre Dv, chaque élément de renforcement métallique (54) présentant un diamètre Df et un rayon de courbure d'hélice Rf défini par Rf=P/(π x Sin(2α)) avec P le pas de chaque élément de renforcement métallique exprimé en millimètres et α l'angle d'hélice de chaque élément de renforcement métallique (54) et Dv=Dh-Df, **dans lequel** Dv, Dh et Df étant exprimés en millimètres :
1,30 ≤ Dv / Df ≤ 4,50 et de préférence 1,60 ≤ Dv/Df ≤ 3,20.

3. Produit renforcé (R) selon la revendication précédente, dans lequel 9 ≤ Rf/Df ≤ 30.

4. Produit renforcé (R) selon l'une quelconque des revendications précédentes, dans lequel l'allongement total At >1,5 % déterminé par la norme ASTM D2969-04 de 2014.

5. Produit renforcé (R) selon l'une quelconque des revendications précédentes, dans lequel le diamètre d'hélice Dh de chaque élément de renforcement métallique (54) est tel que 0,70 mm ≤ Dh ≤ 1,60 mm, de préférence 0,75 mm ≤ Dh ≤ 1,60 mm et plus préférentiellement 0,80 mm ≤ Dh ≤ 1,60 mm.

6. Produit renforcé (R) selon l'une quelconque des revendications précédentes, dans lequel Df est tel que 0,10 mm ≤ Df ≤ 0,50 mm, de préférence 0,15 mm ≤ Df ≤ 0,50 mm et plus préférentiellement 0,15 mm ≤ Df ≤ 0,45 mm.

7. Produit renforcé (R) selon l'une quelconque des revendications 2 à 6, dans lequel Dv est tel que Dv ≥ 0,40 mm, de préférence 0,50 mm ≤ Dv ≤ 1,20 mm.

8. Produit renforcé (R) selon l'une quelconque des revendications 2 à 7, dans lequel chaque élément de renforcement métallique (54) est enroulé à un pas P tel que 3 mm ≤ P ≤ 15 mm, de préférence 5 mm ≤ P ≤ 13 mm et plus préférentiellement 7 mm ≤ P ≤ 11 mm,

9. Produit renforcé (R) selon l'une quelconque des revendications précédentes, dans lequel D ≤ 2,10 mm, de préférence 0,90 mm ≤ D ≤ 2,10 mm et plus préférentiellement 0,95 mm ≤ D ≤ 2,05 mm.

10. Produit renforcé (R) selon l'une quelconque des revendications 1 à 9, dans lequel chaque élément de renforcement métallique (54) du câble (50) est un fil métallique (F) avec N va de 3 à 18 et de préférence de 4 à 15.

11. Produit renforcé (R) selon l'une quelconque des revendications 1 à 9, dans lequel chaque élément de renforcement métallique (54) du câble (50') est un toron (T) avec N va de 3 à 5, M va de 3 à 18 et de préférence de 4 à 15.

12. Produit renforcé (R) selon la revendication précédente, dans lequel les torons (T) définissent une voûte interne (V) du câble (50') de diamètre Dvc, chaque toron (T) présentant un diamètre D et un rayon de courbure d'hélice Rt défini par Rt=Pe/(π x Sin(2αe)) avec Pe le pas de chaque toron exprimé en millimètres et αe l'angle d'hélice de chaque toron (T), Dvc, D et Rt étant exprimés en millimètres, le câble (50') satisfaisant les relations suivantes : 5 ≤ Rt / D ≤ 750 et 0,10 ≤ Dvc / D≤ 0,50.

13. Produit renforcé (R) selon la revendication précédente, dans lequel le pas de chaque toron Pe va de 20 mm à 120 mm.

14. Pneumatique (P), **caractérisé en ce qu'**il comprend au moins un produit renforcé (R) selon l'une quelconque des revendications 1 à 13.

15. Pneumatique (P), selon la revendication précédente, comprenant un sommet (12) comprenant une bande de roulement (20) et une armature de sommet (14), deux flancs (22), deux bourrelets (24), chaque flanc (22) reliant chaque bourrelet (24) au sommet (12), l'armature de sommet (14) s'étendant dans le sommet (12) selon une direction circonférentielle (Z) du pneumatique (P), le pneumatique (P) comprenant une armature de carcasse (32) ancrée dans chacun des bourrelets (24) et s'étendant dans les flancs (22) et dans le sommet (12), l'armature de sommet (14) étant radialement intercalée entre l'armature de carcasse (32) et la bande de roulement (20), l'armature de sommet (14) comprenant au moins un produit renforcé (R) selon l'une quelconque des revendications 1 à 13.

## Patentansprüche

1. Verstärktes Produkt (R), umfassend eine Polymermatrix (MA) und mindestens einen Kord (50; 50'), der eine einzige Lage (52) umfasst, die aus N helixartig gewundenen metallischen Verstärkungselementen (54) besteht, wobei jedes metallische Verstärkungselement (54) der Lage (52), wenn sich der Kord (50; 50') entlang einer im Wesentlichen geradlinigen Richtung erstreckt, eine helixförmige Bahn um eine Hauptachse (A) beschreibt, die im Wesentlichen parallel zu der im Wesentlichen geradlinigen Richtung ist, so dass in einer Schnittebene, die im Wesentlichen senkrecht zu der Hauptachse (A) verläuft, der Abstand zwischen dem Mittelpunkt jedes metallischen Verstärkungselements (54) der Lage (52) und der Hauptachse (A) im Wesentlichen konstant ist und für alle metallischen Verstärkungselemente (54) der Lage (52) gleich ist, wobei es sich bei den metallischen Verstärkungselementen (54) handelt um:
- entweder metallische Drähte (F), die einen Durchmesser Df aufweisen, wobei die metallischen Verstärkungselemente (54) einen Durchmesser Dh, der der Durchmesser des theoretischen Kreises ist, der durch die Mittelpunkte der Drähte (F) der Lage in einer Ebene senkrecht zur Hauptachse des Kabels verläuft, und einen Durchmesser D, der der Außendurchmesser des Kords (50) ist, aufweisen;
- oder Litzen (T), die helixartig um eine Hauptachse (A) gewunden sind, wobei jede Litze (T) eine einzige Lage (56) umfasst, die aus M>1 metallischen Drähten (FT) besteht, die helixartig um eine Achse (B) gewunden sind und einen Durchmesser Df aufweisen, wobei die metallischen Verstärkungselemente (54) einen Durchmesser Dh, der der Durchmesser des theoretischen Kreises ist, der durch die Mittelpunkte der Drähte (FT) der Lage (56) in einer Ebene senkrecht zur Hauptachse der Litze (T) verläuft, und einen Durchmesser D, der der Außendurchmesser der Litze (T) ist, aufweisen;
wobei D, Dh und Df in Millimetern ausgedrückt werden:
- wobei das relative radiale Spiel Jr des Kords derart ist, dass: 0,10 ≤ Jr ≤ 0,20
wobei Jr=N/(π x (D-Df)) x (Dh x Sin(π/N) - (Df / Cos(α x π/180))), wobei α der in Grad ausgedrückte Helixwinkel jedes metallischen Drahts (F) ist;
- wobei die Polymermatrix (Ma) einen nach der Norm NF ISO 37 von Februar 2018 bestimmten Sekanten-Elastizitätsmodul MA10 bei 10 % Verformung im Bereich von 2,5 bis 18,0 MPa aufweist; **dadurch gekennzeichnet, dass**:
- das verstärkte Produkt (R) ein derartiges Modulverhältnis Emax zu Emin aufweist, dass 1< Emax/Emin <4 ist, wobei Emin der minimale Sekanten-Elastizitätsmodul bei Zug ist, d. h. die Steigung der Geraden, die den Ursprung der Spannung-Dehnung-Kurve (0 %; 0 MPa) verbindet, die unter den Bedingungen der Norm ASTM D 2969-04 von 2014 erhalten wird, und Emax der maximale Tangentenmodul der gleichen Kraft-Dehnung-Kurve ist; und
- das verstärkte Produkt (R) eine derartige durch die Norm ASTM D2969-04 von 2014 bestimmte strukturelle Dehnung aufweist, dass 0< As < 1 %.

2. Verstärktes Produkt (R) nach dem vorhergehenden Anspruch, wobei die metallischen Verstärkungselemente (54), ein inneres Gewölbe (58) des Kords mit dem Durchmesser Dv definieren, wobei jedes metallische Verstärkungselement (54) einen Durchmesser Df aufweist und einen Helixkrümmungsradius Rf, der durch Rf=P/(π x Sin(2α)) definiert wird, wobei P die in Millimetern ausgedrückte Steigung jedes metallischen Verstärkungselements ist und α der Helixwinkel jedes metallischen Verstärkungselements (54) ist und Dv=Dh-Df ist, wobei Dv, Dh und Df in Millimetern ausgedrückt werden:
1,30 ≤ Dv / Df ≤ 4,50 und bevorzugt 1,60 ≤ Dv/Df ≤ 3,20.

3. Verstärktes Produkt (R) nach dem vorhergehenden Anspruch, wobei 9 ≤ Rf/Df ≤ 30.

4. Verstärktes Produkt (R) nach einem der vorhergehenden Ansprüche, wobei die durch die Norm ASTM D2969-04 von 2014 bestimmte Gesamtdehnung At > 1,5 % ist.

5. Verstärktes Produkt (R) nach einem der vorhergehenden Ansprüche, wobei der Helixdurchmesser Dh jedes metallischen Verstärkungselements (54) derart ist, dass 0,70 mm ≤ Dh ≤ 1,60 mm, bevorzugt 0,75 mm ≤ Dh ≤ 1,60 mm und noch bevorzugter 0,80 mm ≤ Dh ≤ 1,60 mm.

6. Verstärktes Produkt (R) nach einem der vorhergehenden Ansprüche, wobei Df derart ist, dass 0,10 mm ≤ Df ≤ 0,50 mm, bevorzugt 0,15 mm ≤ Df ≤ 0,50 mm und noch bevorzugter 0,15 mm ≤ Df ≤ 0,45 mm.

7. Verstärktes Produkt (R) nach einem der Ansprüche 2 bis 6, wobei Dv derart ist, dass Dv ≥ 0,40 mm, bevorzugt 0,50 mm ≤ Dv ≤ 1,20 mm.

8. Verstärktes Produkt (R) nach einem der Ansprüche 2 bis 7, wobei jedes metallische Verstärkungselement (54) mit einer derartigen Steigung P gewunden ist, dass 3 mm ≤ P ≤ 15 mm, bevorzugt 5 mm ≤ P ≤ 13 mm und noch bevorzugter 7 mm ≤ P ≤ 11 mm.

9. Verstärktes Produkt (R) nach einem der vorhergehenden Ansprüche, wobei D ≤ 2,10 mm, bevorzugt 0,90 mm ≤ D ≤ 2,10 mm und noch bevorzugter 0,95 mm ≤ D ≤ 2,05 mm.

10. Verstärktes Produkt (R) nach einem der Ansprüche 1 bis 9, wobei jedes metallische Verstärkungselement (54) des Kords (50) ein metallischer Draht (F) mit N im Bereich von 3 bis 18 und bevorzugt von 4 bis 15 ist.

11. Verstärktes Produkt (R) nach einem der Ansprüche 1 bis 9, wobei jedes metallische Verstärkungselement (54) des Kords (50') eine Litze (T) mit N im Bereich von 3 bis 5, M im Bereich von 3 bis 18 und bevorzugt von 4 bis 15 ist.

12. Verstärktes Produkt (R) nach dem vorhergehenden Anspruch, wobei die Litzen (T) ein inneres Gewölbe (V) des Kords (50') mit dem Durchmesser Dvc definieren, wobei jede Litze (T) einen Durchmesser D aufweist und einen Helixkrümmungsradius Rt, der durch Rt=Pe/(π x Sin(2αe)) definiert wird, wobei Pe die in Millimetern ausgedrückte Steigung jeder Litze ist und αe der Helixwinkel jeder Litze (T) ist, wobei Dvc, D und Rt in Millimetern ausgedrückt werden, wobei der Kord (50') die folgenden Gleichungen erfüllt: 5 ≤ Rt / D ≤ 750 und 0,10 ≤ Dvc / D≤ 0,50.

13. Verstärktes Produkt (R) nach dem vorhergehenden Anspruch, wobei die Steigung jeder Litze Pe im Bereich von 20 mm bis 120 mm liegt.

14. Reifen (P), **dadurch gekennzeichnet, dass** er mindestens ein verstärktes Produkt (R) nach einem der Ansprüche 1 bis 13 umfasst.

15. Reifen (P) nach dem vorhergehenden Anspruch, umfassend einen Gürtel (12), der einen Laufstreifen (20) und eine Gürtelverstärkung (14) umfasst, zwei Seitenwände (22), zwei Wülste (24), wobei jede Seitenwand (22) jeden Wulst (24) mit dem Gürtel (12) verbindet, wobei sich die Gürtelverstärkung (14) in dem Gürtel (12) entlang einer Umfangsrichtung (Z) des Reifens (P) erstreckt, wobei der Reifen (P) eine Karkassenverstärkung (32) umfasst, die in jedem der Wülste (24) verankert ist und sich in den Seitenwänden (22) und in dem Gürtel (12) erstreckt, wobei die Gürtelverstärkung (14) radial zwischen der Karkassenverstärkung (32) und dem Laufstreifen (20) angeordnet ist, wobei die Gürtelverstärkung (14) mindestens ein verstärktes Produkt (R) nach einem der Ansprüche 1 bis 13 umfasst.

## Claims

1. Reinforced product (R), comprising a polymer matrix (Ma) and at least one cord (50; 50') comprising a single layer (52) made up of N helically wound metal filamentary elements (54), each metal reinforcing element (54) of the layer (52) describing, when the cord (50; 50') extends in a substantially rectilinear direction, a helical path about a main axis (A) substantially parallel to the substantially rectilinear direction, such that, in a section plane substantially perpendicular to the main axis (A), the distance between the centre of each metal reinforcing element (54) of the layer (52) and the main axis (A) is substantially constant and identical for all the metal reinforcing elements (54) of the layer (52), the metal reinforcing elements (54) being:
- either metal threads (F) having a diameter Df, with the metal reinforcing elements (54) having a diameter Dh which is the diameter of the theoretical circle passing through the centres of the threads (F) of the layer in a plane perpendicular to the main axis of the cord and a diameter D which is the outside diameter of the cord (50);
- or strands (T) helically wound about a main axis (A), each strand (T) comprising a single layer (56) made up of M>1 metal threads (FT) helically wound about an axis (B) and having a diameter Df, with the metal reinforcing elements (54) having a diameter Dh which is the diameter of the theoretical circle passing through the centres of the threads (FT) of the layer (56) in a plane perpendicular to the main axis of the strand (T) and a diameter D which is the outside diameter of the strand (T);
with D, Dh and Df being expressed in millimetres:
- the relative radial clearance Jr of the cord being such that: 0.10 ≤ Jr ≤ 0.20 with Jr=N/(π x (D-Df)) x (Dh x Sin(π/N) - (Df / Cos(α x π/180))), where α is the helix angle, expressed in degrees, of each metal thread (F);
- the polymer matrix (Ma) has a secant elastic modulus MA10 at 10% deformation, determined in accordance with the standard NF ISO 37 of February 2018, ranging from 2.5 to 18.0 MPa; **characterized in that:**
- the reinforced product (R) has a modulus ratio of Emax to Emin such that 1 < Emax/Emin < 4, where Emin is the minimum secant tensile elastic modulus, i.e. the gradient of the straight line connecting the origin of the stress-elongation curve (0%; 0 MPa) obtained under the conditions of the standard ASTM D 2969 - 04 of 2014, and Emax is the maximum tangent modulus of the same force-elongation curve; and
- the reinforced product (R) has a structural elongation As such that 0 < As < 1%, determined by the standard ASTM D2969-04 of 2014.

2. Reinforced product (R) according to the preceding claim, wherein the metal reinforcing elements (54) define an internal enclosure (58) of the cord of diameter Dv, each metal reinforcing element (54) having a diameter Df and a helix radius of curvature Rf defined by Rf=P/(π x Sin(2α)), where P is the pitch of each metal reinforcing element expressed in millimetres and α is the helix angle of each metal reinforcing element (54) and Dv=Dh-Df, **wherein**, with Dv, Dh and Df being expressed in millimetres:
1.30 ≤ Dv / Df ≤ 4.50, and preferably 1.60 ≤ Dv/Df ≤ 3.20.

3. Reinforced product (R) according to the preceding claim, wherein 9 ≤ Rf/Df ≤ 30.

4. Reinforced product (R) according to any one of the preceding claims, wherein the total elongation At is > 1.5%, determined by the standard ASTM D2969-04 of 2014.

5. Reinforced product (R) according to any one of the preceding claims, wherein the helix diameter Dh of each metal reinforcing element (54) is such that 0.70 mm ≤ Dh ≤ 1.60 mm, preferably 0.75 mm ≤ Dh ≤ 1.60 mm, and more preferentially 0.80 mm ≤ Dh ≤ 1.60 mm.

6. Reinforced product (R) according to any one of the preceding claims, wherein Df is such that 0.10 mm ≤ Df ≤ 0.50 mm, preferably 0.15 mm ≤ Df ≤ 0.50 mm, and more preferentially 0.15 mm ≤ Df ≤ 0.45 mm.

7. Reinforced product (R) according to any one of Claims 2 to 6, wherein Dv is such that Dv ≥ 0.40 mm, preferably 0.50 mm ≤ Dv ≤ 1.20 mm.

8. Reinforced product (R) according to any one of Claims 2 to 7, wherein each metal reinforcing element (54) is wound at a pitch P such that 3 mm ≤ P ≤ 15 mm, preferably 5 mm ≤ P ≤ 13 mm, and more preferentially 7 mm ≤ P ≤ 11 mm.

9. Reinforced product (R) according to any one of the preceding claims, wherein D ≤ 2.10 mm, preferably 0.90 mm ≤ D ≤ 2.10 mm, and more preferentially 0.95 mm ≤ D ≤ 2.05 mm.

10. Reinforced product (R) according to any one of Claims 1 to 9, wherein each metal reinforcing element (54) of the cord (50) is a metal thread (F) with N ranging from 3 to 18 and preferably from 4 to 15.

11. Reinforced product (R) according to any one of Claims 1 to 9, wherein each metal reinforcing element (54) of the cord (50') is a strand (T) with N ranging from 3 to 5, M ranging from 3 to 18 and preferably from 4 to 15.

12. Reinforced product (R) according to the preceding claim, wherein the strands (T) define an internal enclosure (V) of the cord (50') of diameter Dvc, each strand (T) having a diameter D and a helix radius of curvature Rt defined by Rt=Pe/(π x Sin(2αe)), where Pe is the pitch of each strand expressed in millimetres and αe is the helix angle of each strand (T), with Dvc, D and Rt being expressed in millimetres, the cord (50') satisfying the following relationships: 5 ≤ Rt / D ≤ 750 and 0.10 ≤ Dvc / D ≤ 0.50.

13. Reinforced product (R) according to the preceding claim, wherein the pitch Pe of each strand ranges from 20 mm to 120 mm.

14. Tyre (P), **characterized in that** it comprises at least one reinforced product (R) according to any one of Claims 1 to 13.

15. Tyre (P) according to the preceding claim, comprising a crown (12) comprising a tread (20) and a crown reinforcement (14), two sidewalls (22), and two beads (24), each sidewall (22) connecting each bead (24) to the crown (12), the crown reinforcement (14) extending in the crown (12) in a circumferential direction (Z) of the tyre (P), the tyre (P) comprising a carcass reinforcement (32) that is anchored in each of the beads (24) and extends in the sidewalls (22) and in the crown (12), the crown reinforcement (14) being radially interposed between the carcass reinforcement (32) and the tread (20), the crown reinforcement (14) comprising at least one reinforced product (R) according to any one of Claims 1 to 13.
